# EUROPÄISCHE PATENTANMELDUNG

(11) **EP 4 760 352 A1**
(43) Veröffentlichungstag der Anmeldung: **17.06.2026**
(21) Anmeldenummer: 24220157.2
(22) Anmeldetag: 16.12.2024
(51) Int. Cl.: G01S 13/88, B64F 1/305

(54) **BESTIMMEN EINER AUSSENOBERFLÄCHE EINES FLUGZEUGS RELATIV ZU EINER ZUGANGSVORRICHTUNG**

(71) Anmelder: Hübner GmbH & Co. KG, 34123 Kassel (DE)
(72) Erfinder: Kessler, Dirk-Wolfram, 34246 Vellmacr (DE); Frederik, Franz, 34121 Kassel (DE)

(57) **Zusammenfassung**

Verfahren zum Bestimmen der Position einer Außenoberfläche (12) eines schwimmfähigen oder flugfähigen Transportmittels (38) relativ zu einer Zugangs- oder Zuführvorrichtung (14), wobei an der Zugangs- oder Zuführvorrichtung (14) eine Messeinrichtung (18) angeordnet ist, welche eine Sendeeinheit (22) zum Aussenden von elektromagnetischen und/oder mechanischen Wellen (λ1), eine Empfangseinheit (24) zum Empfangen des reflektierten Teils (A2) der ausgesendeten Wellen (λ1), und eine Steuerungseinheit (26) zum Steuern und/oder Regeln der Messeinrichtung (18) umfasst, wobei das Verfahren folgende Schritte umfasst: wobei das Verfahren folgende Schritte umfasst:
- Definieren eines Messbereichs (MB), in welchem sich die Außenoberfläche (12) erwartungsgemäß befindet oder welcher von der Außenoberfläche (12) erwartungsgemäß durchlaufen wird, mittels der Steuerungseinheit (26),
- Definieren zumindest eines Bezugsabschnitts (40a, 40b, 40c), welcher sich im Messbereich (MB) befindet oder welcher den Messbereich (MB) durchläuft, mittels der Steuerungseinheit (26),
- Aussenden der Wellen (λ₁) mittels der Sendeeinheit (22) derart, dass die Wellen (λ₁) den Messbereich (MB) erfassen,
- Empfangen des reflektierten Teils (λ₂) der ausgesendeten Wellen (λ₁) mittels der Empfangseinheit (24),
- Erzeugen einer Punktewolke (PW), welche den Verlauf der Außenoberfläche (12) abbildet, unter Verwendung des empfangenen reflektierten Teils (λ₂) der ausgesendeten Wellen (λ₁), mittels der Steuerungseinheit (26),
- Bestimmen zumindest eines Schnittpunkts (SP), in welchem sich die Punktewolke (PW) und der Bezugsabschnitt (40a, 40b, 40c) schneiden, und Bestimmen der Position des Schnittpunkts (SP), mittels der Steuerungseinheit (26).

Ferner betrifft die Erfindung eine Zugangs- oder Zuführvorrichtung (14), welche mit einem solchen Verfahren betrieben werden kann.

## Beschreibung

Die vorliegende Erfindung betrifft ein Verfahren zum Bestimmen des Verlaufs einer Außenoberfläche eines schwimm- oder flugfähigen Transportmittels und/oder zum Bestimmen der Position der Außenoberfläche relativ zu einer Zugangs- oder Zuführvorrichtung. Ferner betrifft die Vorrichtung eine Zugangs- oder Zuführvorrichtung, welche mit einem solchen Verfahren betrieben werden kann.

An den meisten großen Flughäfen mit modernen Abfertigungshallen werden Zugangsvorrichtungen eingesetzt, welche überwiegend als geschlossene Gangways ausgestaltet sind. Fluggastbrücken sind fest mit dem Gate verbunden, aber zwei- oder dreidimensional bewegbar, so dass sie an die Einstiegstüren der Flugzeuge, nachfolgend als Flugzeugtüren bezeichnet, herangefahren werden können. Über diese Zugangsvorrichtungen gelangen Fluggäste direkt in das Flugzeug und betreten im Verlauf des Boardings das Vorfeld nicht. Zugangsvorrichtungen haben noch den weiteren Vorteil, dass die Fluggäste direkt, schnell, stufenlos und frei von Witterungseinflüssen ins Flugzeug gelangen können.

Eine weitere Ausgestaltung von Zugangsvorrichtungen stellen Fluggasttreppen dar, welche vom Vorfeld hoch zu den Flugzeugtüren führen. Fluggasttreppen werden insbesondere aus finanziellen Gründen eingesetzt.

Zuführvorrichtungen dienen neben dem Ein- und Ausstieg der Passagiere zum Beladen mit oder Entladen von Gegenständen wie Gepäck oder dergleichen. Zuführvorrichtungen können beispielsweise als Gepäckförderband oder als Hubwagen für Container oder für Cateringfahrzeuge ausgebildet sein.

Die vorliegende Erfindung wird im Folgenden anhand von Flugzeugen beschrieben, die nachfolgende Beschreibung trifft aber gleichermaßen auf andere Transportmittel, insbesondere flugfähige Transportmittel, aber auch zum Beispiel schwimmfähige Transportmittel wie Schiffe zu. Das schwimmfähige Transportmittel befindet sich statt auf einem Boden auf einer Wasseroberfläche und ist im Rahmen dieser Erfindung stets mitgemeint, auch wenn flugbezogenes Vokabular verwendet wird.

Die vorliegende Erfindung wird im Folgenden anhand von Zugangsvorrichtungen beschrieben, die nachfolgende Beschreibung trifft aber gleichermaßen auf Zuführvorrichtungen zu. Hierunter ist insbesondere, jedoch nicht ausschließlich, das letzte, flugzeugnächste Modul der größeren Zugangsbauteilgruppe zu verstehen, auf der eine Person oder ein Gegenstand ins Flugzeuginnere gelangen kann. Die Zugangseinrichtung besitzt ein freies, zum Flugzeug hinweisendes Ende, typischerweise mit einem umlaufenden balgartigen Faltenvordach insbesondere aus einem flächigen, im Querschnitt ringförmigen Gummi- oder Silikonbauteil, welches sich an die jeweilige Flugzeugoberfläche anschmiegt.

Die Zugangsvorrichtung kann verschiedene Komponenten umfassen, wie beispielsweise Treppen, überdachte Kabinen, Plattformen, Geländer, Türen, Pendelböden oder andere Elemente, die den Zugang erleichtern. Sie kann auch über Mechanismen verfügen, um sich an verschiedene Höhen oder Positionen des Flugzeugrumpfs anzupassen.

Zugangsvorrichtungen müssen im laufenden Betrieb häufig in vertikaler oder horizontaler Richtung reguliert werden. Die meisten Zugangsvorrichtungen sind dreidimensional beweglich auf einem drehbaren und verstellbaren Fahrwerk gelagert. Sie können in x-, in y- und in z-Richtung reguliert werden, um den unterschiedlichen Flugzeugtypen und den hiermit einhergehenden unterschiedlichen Positionen der Flugzeugtüren Rechnung tragen zu können. Hierbei stellt eine Bewegung in x-Richtung die Bewegung in Fahrtrichtung der Zugangsvorrichtung, also eine Vor- oder Zurückbewegung dar, die Bewegung in z-Richtung hingegen die vertikale und die Bewegung in y-Richtung die horizontale Bewegung dar.

Die horizontale Regulierung erfolgt beim langsamen Annähern der Zugangsvorrichtung an ein Flugzeug, während die vertikale Regulierung ebenfalls während des Be- und Entladens, insbesondere aufgrund des veränderlichen Gewichts im Flugzeug, von Bedeutung ist.

Wenn die Positionsänderung des Rumpfes des Flugzeugs gegenüber dem Bodenniveau ein gewisses Maß überschritten hat, muss auch die Position der Zugangsvorrichtung angepasst werden. Dies kann, wie bereits beschrieben, insbesondere aufgrund des Be- und Entladens des betreffenden Flugzeugs beispielsweise in vertikaler Richtung der Fall sein. Bei einer geringen Höhenveränderung ist diese Anpassung noch nicht nötig. Die Höhendifferenz zwischen dem begehbaren Boden der Zugangsvorrichtung und der Flugzeugtür kann ohne Nachregulierung nach einem Be- oder Entladevorgang circa einen halben Meter betragen. Mit zunehmender Höhendifferenz steigt das Sicherheitsrisiko.

Neben dieser Nachregulierung in der Höhe ist insbesondere beim langsamen Annähern des Flugzeugs an die Zugangsvorrichtung, also bei der Verbindung des Flugzeugs mit der Zugangsvorrichtung auch das Regulieren der Zugangsvorrichtung an die Flugzeugtür wichtig, weshalb die Zugangsvorrichtung insbesondere auch zusätzlich in x- und y-Richtung automatisiert reguliert werden soll.

### STAND DER TECHNIK

Es sind Zugangsvorrichtungen bekannt, deren Position an die sich in x- und/oder y- und/oder z-Richtung verändernde Flugzeugtür oder andere markante Punkte der Flugzeuggeometrie händisch angepasst wird. Zumeist erfolgte in der Vergangenheit die Anpassung manuell elektronisch durch einen Brückenfahrer, der das Bauteil mit einem Joystick bewegte.

Unter anderem aus der FR 2 573 724 A1 ist es bekannt, eine Zugangsvorrichtung mit optoelektronischen Mitteln auszurüsten, die eine Lageveränderung der Flugzeugtür des Flugzeugs zur herangeführten Zugangsvorrichtung feststellen und eine Korrekturbewegung veranlassen können.

Die FR 2 573 724 A1 zeigt auch ein mechanisches Bauteil, nämlich einen sogenannten Autoleveler, der einen zur Zugangsvorrichtung gehörenden, auf den Flugzeugrumpf aufbringbaren gummierten Messkörper in Rad- oder Walzenform aufweist. Dieser Messkörper befindet sich am freien Ende eines Schwenkarms und weist eine Codierplatte und verschiedene Näherungsschalter auf. Anhand von Umdrehungen kann eine Längenmessung durchgeführt werden, wodurch die vertikale Verschiebung des Luftfahrzeugs sensiert und die Nachregulierung der Brücke veranlasst werden kann. Die nicht berührungslos funktionierende Sensorik des Autolevelers bringt eine Reihe von Nachteilen mit sich, insbesondere kann die Flugzeughaut beim Andocken des Messkörpers durch Aufschlag beschädigt werden, was besonders bei Carbonrümpfen der Fall ist. Darüber hinaus ergibt sich aber die Problematik, dass der Autoleveler nicht unter allen Witterungsbedingungen gleich gut funktioniert, da bei einem feuchten oder vereisten Flugzeugrumpf am Messkörper Schlupf entstehen kann, wodurch die Messwerte verfälscht werden. Auch für den Fall, dass es zu einem plötzlichen Absacken des Flugzeuges kommt, ist nicht immer gewährleistet, dass der Messkörper an dem Flugzeugrumpf tatsächlich entlang rollt, sondern gleitende oder rutschende Bewegung ausführt. Bei gleitenden oder rutschenden Bewegungen wird unter Umständen keiner der Näherungsschalter des Messkörpers aktiviert, wodurch auch die Steuereinrichtung des Positionierantriebes der Zugangsvorrichtung kein entsprechendes Signal zum Absenken oder Anheben erhält. Insofern besteht gar die Gefahr, dass das Flugzeug mit der nach außen ausgeschwenkten Tür auf dem Boden der Zugangsvorrichtung aufsetzt, infolgedessen es hierbei zu Beschädigungen an beiden kommt.

Es ist bekannt, zusätzlich zu dem Autoleveler noch einen sogenannten Sicherheitsschuh vorzusehen, der zwischen dem Boden der Zugangsvorrichtung einerseits und der Unterkante der Tür des Flugzeuges andererseits angeordnet ist. Wird durch die Flugzeugtür Druck auf den Sicherheitsschuh ausgeübt, so sorgt der Sicherheitsschuh in seiner Funktion als Kontaktschalter durch ein entsprechendes Signal an die Steuereinrichtung des Positionierantriebes ebenfalls für ein Absenken der Zugangsvorrichtung. Der Sicherheitsschuh ist notwendig, um einen Schnellablass der Zugangsvorrichtung einzuleiten, wenn es zu einem plötzlichen, eventuell ruckartigen Absenken des Flugzeugs kommt. Der Sicherheitsschuh muss bei jedem Boarding unterhalb der geöffneten Tür des Flugzeugs manuell angeordnet werden.

Daneben existieren auch bereits verschiedene berührungslos funktionierende Instrumente zur Anpassung der Zugangsvorrichtung in vertikaler oder horizontaler Richtung:
In EP 3 560 840 A1 ist eine Sicherheitseinrichtung mit berührungslos arbeitendem Näherungssensor beschrieben, der zur zeitaufgelösten Erkennung einer Anpassung des vertikalen Abstands der Zugangsvorrichtung zur Flugzeugtür dient und direkt in der Zugangsvorrichtung unterhalb der begehbaren Oberseite der Zugangsvorrichtung angeordnet ist.

EP 3 088 305 A1 zeigt ein Positionierungsverfahren am Flugzeugrumpf mit mindestens zwei Mehrkanalscannern, bei welchem eine Referenzposition der Zugangsvorrichtung im angedockten Zustand genutzt wird, in bestimmten zeitlichen Abständen die momentane Position des Flugzeugrumpfes relativ zur Zugangsvorrichtung ermittelt und bei Feststellen einer Abweichung mit einer Rechnereinheit ein Signal an die Steuerung des Positionierantriebes zur Nachjustierung der Zugangsvorrichtung übermittelt wird.

Eine bewegliche Zugangsvorrichtung für ein Flugzeug mit einem an der Zugangsvorrichtung angeordneten Scanner wird in DE 10 2011101418 A1 erwähnt, wobei mit dem Scanner die Position des Flugzeuges relativ zur Zugangseinrichtung bestimmt wird.

Die Offenlegungsschriften EP 3 908 521 A1 als auch EP 3 760 547 A1 zeigen ebenfalls eine durch eine Verstelleinrichtung in der Höhe und/oder in x- und y-Richtung anpassbare Plattform. In der technischen Lösung, die in EP 3 908 521 A1 präsentiert wird, funktioniert die verwendete Sensorik unter Verwendung von Markierungseinrichtungen. Beim Heben oder Senken des Flugzeugs wird mit einer Kamera aufgezeichnet, wie sich die durch einen Laser auf die Flugzeugaußenoberfläche projizierten Markierungen bewegen. Die Markierungen stellen somit eine notwendige Referenz dar, gegenüber der die Höhenänderung relativ angegeben werden kann.

Unvorteilhaft ist, die Sensorik wie in der EP 3 760 547 A1 bodennah anzuordnen. Bei einer bodennahen Anordnung ist die Sensorik nicht nur Witterungseinflüssen ausgesetzt, sondern kann von Menschen, Maschinen und Fahrzeugen, die sich aus Abfertigungsgründen auf dem Vorfeld bewegen, beschädigt werden. Zudem stellt die Sensorik zusätzliche Risiken für die Menschen, Maschinen und Fahrzeuge dar. Neben den Sicherheitsrisiken und der Beschädigung kann die Messung selbst in der bodennahen Anordnung auch einfacher gestört werden.

Neben dem ungenügenden Schutz vor Witterungs-, Niederschlagseinflüssen und anderen Störgrö-ßen, welche die Messwerte beeinflussen, weist eine Anordnung direkt unter der Plattform zudem den Nachteil auf, dass ein für eine aussagekräftige Messung zu kleiner Teil der Flugzeugoberfläche und damit eine zu kleine Messfläche eingesehen werden kann.

Weiterhin wird auf die CN 116 309 468 A, die CN 114 924 289 A und die US 2023/0099541 A1 verwiesen. Bei der CN 116 309 468 A kann der Öffnungszustand einer Flugzeugtür kontaktlos festgestellt werden.

### OFFENBARUNG DER ERFINDUNG

Ausgehend vom oben genannten Stand der Technik ist es eine Aufgabe der vorliegenden Erfindung, eine Abhilfe für die zuvor genannten Nachteile zu schaffen und insbesondere ein Verfahren bereitzustellen, mit welchem der Verlauf und/oder die Position einer Außenoberfläche eines Flugzeugs relativ zu einer Zugangs- oder Zuführvorrichtung auf zuverlässige Weise und ohne die Notwendigkeit des Vorhandenseins eines Markers auf der Außenoberfläche des Flugzeugs bestimmt werden kann. Ferner ist es eine Aufgabe der vorliegenden Erfindung, eine Vorrichtung zum Bestimmen des Verlaufs und/oder der Position einer Außenoberfläche eines schwimm- oder flugfähigen Transportmittels relativ zu einer Zugangs- oder Zuführvorrichtung anzugeben, welche mit einem solchen Verfahren betrieben werden kann.

Diese Aufgabe wird mit den in den Ansprüchen 1 und 11 angegebenen Merkmalen gelöst. Vorteilhafte Ausführungsformen sind Gegenstand der Unteransprüche.

Eine Ausführungsform der Erfindung betrifft ein Verfahren zum Bestimmen der Position und/oder des Verlaufs einer Außenoberfläche eines Flugzeugs relativ zu einer Zugangs- oder Zuführvorrichtung, wobei an der Zugangs- oder Zuführvorrichtung eine Messeinrichtung angeordnet ist, welche
- eine Sendeeinheit zum Aussenden von elektromagnetischen und/oder mechanischen Wellen,
- eine Empfangseinheit zum Empfangen des reflektierten Teils der ausgesendeten Wellen, und
- eine Steuerungseinheit zum Steuern und/oder Regeln der Messeinrichtung umfasst,
wobei das Verfahren folgende Schritte umfasst:
- Definieren eines Messbereichs, in welchem sich die Außenoberfläche erwartungsgemäß befindet oder welcher von der Außenoberfläche erwartungsgemäß durchlaufen wird, mittels der Steuerungseinheit,
- Definieren zumindest eines Bezugsabschnitts, welche sich im Messbereich befindet oder welche den Messbereich durchläuft,
- Aussenden der Wellen mittels der Sendeeinheit derart, dass die Wellen den Messbereich erfassen,
- Empfangen des reflektierten Teils der ausgesendeten Wellen mittels der Empfangseinheit,
- Erzeugen einer Punktewolke, welche den Verlauf der Außenoberfläche abbildet, unter Verwendung des empfangenen reflektierten Teils der ausgesendeten Wellen, mittels der Steuerungseinheit,
- Bestimmen zumindest eines Schnittpunkts, in welchem sich die Punktewolke und der Bezugsabschnitt schneiden, und Bestimmen der Position des Schnittpunkts, mittels der Steuerungseinheit.

Zunächst wird ein Messbereich definiert. Wie eingangs erwähnt, ist das vorliegende Verfahren hauptsächlich zum Bestimmen der Position von Transportmitteln wie Flugzeugen oder Schiffen verwendbar. Wenn das betreffende Flugzeug die Halteposition oder das betreffende Schiff am Anleger befestigt ist, ist bekannt, wo sich die Außenoberfläche in etwa befindet. Zudem ist auch die Position der Messeinrichtung bekannt, die typischerweise an der Zugangs- oder Zuführvorrichtung angeordnet ist. Der Messbereich kann dann so definiert werden, dass die elektromagnetischen und/oder mechanischen Wellen zumindest größtenteils auf die Außenoberfläche des Transportmittels treffen und nicht auf den Boden, auf die Wasseroberfläche oder auf die Zugangs- oder Zuführvorrichtung. Es genügt, nur einen Teil der Außenoberfläche zu vermessen.

Aus dem reflektierten Teil der Wellen wird eine Punktewolke erzeugt, welche den Verlauf der Außenoberfläche diskret anhand einer Vielzahl von Punkten abbildet. Gemäß dem vorliegenden Verfahren wird geschaut, ob die Punktewolke mit zumindest einem zuvor definierten Bezugsabschnitt schneidet. Wenn nicht, wird die zugehörige Messung verworfen. Wenn ja, wird die Position zumindest eines Schnittpunkts, in welchem sich die Punktewolke und der Bezugsabschnitt schneiden, ermittelt. Die Anzahl von Flugzeugtypen, die an einer Zugangs- oder Zuführvorrichtung abgefertigt werden, ist üblicherweise begrenzt. Zudem ist die Halteposition des Flugzeugs an der betreffenden Zugangs- oder Zuführvorrichtung vorgegeben, damit gewährleistet ist, dass die in ihrer Reichweite begrenzte Zugangs- oder Zuführvorrichtung an eine der Flugzeugtüren herangefahren werden kann. Insofern ist auch zumindest annäherungsweise bekannt, zu welchem Bereich des Flugzeugrumpfes die vermessene Außenoberfläche gehören muss. Somit kann die Bestimmung eines Schnittpunktes zwischen dem Bezugsabschnitt und der Punktewolke genügen, um mit ausreichender Genauigkeit die Position der Außenoberfläche des Flugzeugs bestimmen zu können.

Das vorliegende Verfahren benötigt eine geringe Rechenleistung, weshalb die Position der Außenoberfläche des Transportmittels nahezu in Echtzeit und quasi-kontinuierlich ermittelt werden kann. Mit zunehmender Anzahl von Bezugsabschnitten und der entsprechenden Anzahl von Schnittpunkten erhöht sich die Genauigkeit der Bestimmung der Position der Außenoberfläche des Transportmittels. Aufgrund der Tatsache, dass zur Bestimmung der Schnittpunkte eine geringe Rechenleistung notwendig ist, kann die Position der Außenoberfläche mit einer erhöhten Genauigkeit ermittelt werden, ohne dass die hierfür benötigte Zeit unverhältnismäßig lang wird.

In der nun vorliegenden Erfindung können die bei aus dem Stand der Technik bekannten nachregulierbaren Zugangs- oder Zuführvorrichtungen üblicherweise verwendeten Bauteile, nämlich der Autoleveler als auch der Sicherheitsschuh, eingespart werden und eine kontaktlose Nachregulierung erfolgen, ohne dass eine Markierung erforderlich ist.

Gemäß einer weitergebildeten Ausführungsform kann der Bezugsabschnitt eine Bezugslinie, eine Bezugsfläche oder ein Bezugsvolumen sein. Grundsätzlich kann der Bezugsabschnitt frei definiert werden, solange ein Schnittpunkt mit dem Bezugsabschnitt ermittelt werden kann. Aus geometrischer und programmiertechnischer Sicht bietet sich eine Bezugslinie, eine Bezugsfläche oder ein Bezugsvolumen an, welche jeweils zusammenhängend und daher kontinuierlich und stetig im mathematischen Sinne sein können.

In einer fortgebildeten Ausführungsform können die Bezugslinie eine Gerade, oder die Bezugsfläche eine Ebene, oder das Bezugsvolumen ein Quader sein. In allen drei Fällen enthält der Bezugsabschnitt in dieser Ausführungsform keine Wölbungen, was den Programmier- und Rechenaufwand gering hält.

In einer weiteren Ausführungsform des Verfahrens wird der folgende Schritt durchgeführt:
- Erzeugen einer Verlaufsfläche oder Verlaufslinie aus der Punktewolke, welche den Verlauf der Außenoberfläche abbildet, mittels der Steuerungseinheit.

Wie erwähnt, wird zur Bestimmung der Position der Außenoberfläche des Transportmittels zumindest ein Schnittpunkt ermittelt, in welchem sich die Punktewolke und der Bezugsabschnitt schneiden. Die Bestimmung des Schnittpunkts wird genauer, wenn unter Verwendung der Punkte der Punktewolke eine auf die Außenoberfläche des Transportmittels bezogene Verlaufsfläche bzw. eine Verlaufslinie erzeugt wird. Dies kann unter Verwendung von Approximationsverfahren geschehen. So kann die Verlaufslinie diejenige Linie sein, zu welcher die zur Definition verwendeten Punkte der Punktewolke den geringsten Abstand haben. Analog kann bei der Definition der Verlaufsfläche vorgegangen werden. Dabei ist es nicht notwendig, dass die Verlaufsfläche oder die Verlaufslinie die gesamte Punktewolke berücksichtig. Vielmehr kann ein Betrachtungsbereich innerhalb des Messbereichs definiert werden, in welchem sich der Schnittpunkt aller Wahrscheinlichkeit nach befinden muss. Hierdurch kann Rechenaufwand eingespart werden.

Bei einer weiteren Ausführungsform können die folgenden Schritte vorgesehen sein,
- Definieren eines Umgebungsbereichs um den Bezugsbereich, und
- Definieren des Schnittpunkts unter Verwendung der im Umgebungsbereich liegenden Punkte der Punktewolke, jeweils mittels der Steuerungseinheit.

Diese Schritte bieten sich insbesondere dann an, wenn der Bezugsbereich mittels einer Bezugslinie definiert ist und aus der Punktewolke keine Verlaufsfläche oder Verlaufslinie erzeugt wird, um den Verlauf der Außenoberfläche abzubilden. Dass ein Punkt genau auf der Bezugslinie liegt, ist relativ unwahrscheinlich. Ein Schnittpunkt kann dadurch ermittelt werden, dass zumindest ein Punkt der Punktewolke gesucht wird, der im Umgebungsbereich liegt. Der Umgebungsbereich kann beispielsweise mit einem Kreis definiert werden, der entlang des Bezugsabschnitts so lange verschoben wird, bis dass zumindest ein Punkt der Punktewolke innerhalb dieses Kreises liegt. Die Position des Mittelpunktes dieses Kreises auf dem Bezugsabschnitt und insbesondere auf der Bezugslinie kann dann als Schnittpunkt angenommen werden. Auch diese Vorgehensweise führt zu einem geringen Rechenaufwand.

In einer weiterentwickelten Ausführungsform ist der Verlauf der Außenoberfläche zumindest eines schwimmfähigen oder flugfähigen Transportmittels auf der Steuerungseinheit hinterlegt. Insbesondere bei Flugzeugen ist die Anzahl von Flugzeugtypen, welche an einer Zugangs- oder Zuführvorrichtung abgefertigt werden sollen, begrenzt. Zudem wird der Schnittpunkt beispielsweise aus Gründen der Redundanz mindestens unter Verwendung von drei Bezugsabschnitten, üblicherweise deutlich mehr Bezugsabschnitten, durchgeführt. Da auch zumindest annäherungsweise bekannt ist, welcher Abschnitt der Außenoberfläche vermessen wird, können die ermittelten Schnittpunkte mit den hinterlegten Verläufen verglichen und der am besten passende Verlauf identifiziert werden. Anhand des identifizierten Verlaufs kann dann auch der Verlauf der Außenoberfläche außerhalb des Messbereichs bestimmt werden. Zudem kann eine automatische Erkennung des Flugzeugtyps vorgenommen werden. Die Steuerungseinheit kann einen entsprechenden Vorschlag an das Bodenpersonal oder an den Piloten schicken, mit der Aufforderung, den vorgeschlagenen Flugzeugtyp zu bestätigen oder gegebenenfalls zu korrigieren. Es kann auch eine Kommunikation zwischen der Steuerungseinheit und einem Transponder oder einer anderen Identifikationseinheit des Flugzeugs aufgebaut werden, um automatisch den Flugzeugtyp abzugleichen.

In einer Ausführungsform der Erfindung sind die Sendeeinheit und die Empfangseinheit nicht baulich voneinander getrennt, sondern im selben Bauteil zusammengeführt. In einer solchen Ausführungsform der Erfindung können auch die Eigenschaften der ausgesendeten Wellen in die Auswertung der Wellen bezüglich der auf die räumliche Verteilung ihrer Ursprungsorte bezogenen Größen und den Vergleich mit dem Schwellenwert miteinbezogen werden.

Hierdurch können Überlagerungen von ausgesendeten Wellen und empfangenen Wellen, Interferenzen nach dem Superpositionsprinzip, für die Auswertung mitberücksichtigt werden.

Denkbar ist auch, in einer weiteren Ausführungsform auch den Anteil der ausgesendeten Wellen, welcher gestreut wird, in die Auswertung und den Vergleich mit dem Schwellenwert miteinzubeziehen.

In einer besonderen Ausführungsform können genannte bezogene Größen die Intensität, die Phase, die Frequenz und/oder die Signalstärke der ausgesendeten Wellen und/oder des reflektierten Teils der ausgesendeten Wellen umfassen.

Unter Verwendung geeigneter Modulations- und Demodulationsverfahren, insbesondere, aber nicht ausschließlich bezüglich Phase, Frequenz, Signalstärke oder Intensität, können die relevanten Eigenschaften der relevanten Wellen ebenfalls ausgewertet werden. Position, Geschwindigkeit und andere Eigenschaften von Objekten lassen sich durch diese Größen leichter bestimmen. Durch die Auswertung dieser Parameter lassen sich beispielsweise die Richtung eines Ziels bestimmen oder Bewegungsmuster analysieren.

In einer anderen Ausführungsform können die auf die räumliche Verteilung der Ursprungsorte bezogenen Größen, die räumliche und/oder zeitliche Änderung der Intensität der Phase, der Frequenz und/oder der Signalstärke der ausgesendeten Wellen und/oder des reflektierten Teils der ausgesendeten Wellen umfassen.

Durch die Analyse der räumlichen Änderung der Intensität von Wellen können Bewegungen erkannt werden. Wenn sich ein Objekt im Erfassungsbereich des Sensors bewegt, ändert sich das Muster der empfangenen Wellenintensität. Dieses Signal kann dann verwendet werden, um die Bewegung zu erkennen und darauf basierend weitere Aktionen auszulösen. Indem die Phasenverschiebung zwischen ausgesendeten und reflektierten Wellen gemessen wird, kann die Entfernung und die genaue Position des Objekts ermittelt werden. Dies ermöglicht eine präzise Verfolgung und Steuerung von Bewegungen. Die Analyse der Frequenzänderungen von Wellen ermöglicht die Messung der Geschwindigkeit von sich bewegenden Objekten. Durch die Auswertung der Frequenzverschiebung zwischen gesendeten und empfangenen Wellen kann die Geschwindigkeit des Objekts ermittelt werden.

Dies ist besonders nützlich, um Bewegungen in Echtzeit zu überwachen und gegebenenfalls darauf zu reagieren. Wenn beispielsweise eine Abweichung von einer gewünschten Position oder Bewegung erkannt wird, kann das Sensorsystem entsprechende Signale an Aktuatoren senden, um das Objekt nachzusteuern und die gewünschte Bewegung wiederherzustellen.

Bei einer weitergebildeten Ausführungsform, bei welcher die Zugangs- oder Zuführvorrichtung eine Positionierungseinrichtung zum Ändern der Position der Zugangs- oder Zuführvorrichtung aufweist, können mittels der Steuerungseinheit
- ein Positionsdifferenzschwellenwert bezüglich der Position der Außenoberfläche definiert werden,
- zu einem ersten Zeitpunkt eine erste Position des Schnittpunkts und zu einem zweiten Zeitpunkt eine zweite Position des Schnittpunkts ermittelt werden,
- die erste Position mit der zweiten Position verglichen und eine Differenz zwischen der ersten Position und der zweiten Position ermittelt und mit dem Positionsdifferenzschwellenwert verglichen werden, und
- für den Fall, dass der Positionsdifferenzschwellenwert unter- oder überschritten wird, die Positionierungseinrichtung derart aktiviert werden, dass die Differenz verringert wird.

Dies sorgt dafür, dass nur ab einem gewissen vorher festgelegten Mindestwert oder in einem festgelegten Messbereich von Mindest- und Höchstwert reguliert wird. Mittels der Ermittlung der ersten und zweiten Position der Schnittpunkte zu verschiedenen Zeitpunkten und den Vergleich der Differenz zwischen diesen Positionen mit dem Positionsdifferenzschwellenwert können Bewegungen oder Veränderungen der Außenoberfläche erkannt werden. Die Aktivierung der Positionierungseinrichtung ermöglicht es, die ermittelte Differenz zu verringern und die Vorrichtung an die aktualisierte Position anzupassen.

Die Positionierungseinrichtung im Sinne dieser Erfindung kann beispielsweise, aber nicht ausschließlich, eine hydraulische oder elektrische Hebeeinrichtung sein. Bei einer hydraulischen Hebeeinrichtung können im Fall der Aktivierung der hydraulischen Systeme Kolben ausgefahren und wieder eingefahren werden.

Bei einer weiteren Ausführungsform kann mittels der Messeinrichtung der Abstand zwischen der Messeinrichtung und
- dem Boden, auf dem das flugfähige Transportmittel steht, oder
- der Wasseroberfläche, auf welcher das schwimmfähige Transportmittel schwimmt, bestimmt werden.

Die Bestimmung des Abstands zwischen der Messeinrichtung und dem Boden bzw. der Wasseroberfläche wird weitestgehend auf dieselbe Weise durchgeführt wie für die Bestimmung der Position der Außenoberfläche des Transportmittels beschrieben. Insofern werden zur Bestimmung des Bodens oder der Wasseroberfläche die folgenden Schritte durchlaufen:
- Definieren eines weiteren Messbereichs, in welchem sich der Boden oder die Wasseroberfläche erwartungsgemäß befindet oder welcher vom Boden oder der Wasseroberfläche erwartungsgemäß durchlaufen wird, mittels der Steuerungseinheit,
- Definieren zumindest eines weiteren Bezugsabschnitts, welcher sich im weiteren Messbereich befindet oder welcher den Messbereich durchläuft, mittels der Steuerungseinheit,
- Aussenden der Wellen mittels der Sendeeinheit derart, dass die Wellen den weiteren Messbereich erfassen,
- Empfangen des reflektierten Teils der ausgesendeten Wellenmittels der Empfangseinheit,
- Erzeugen einer weiteren Punktewolke, welche den Verlauf des Bodens oder der Wasseroberfläche abbildet, unter Verwendung des empfangenen reflektierten Teils der ausgesendeten Wellen, mittels der Steuerungseinheit,
- Bestimmen zumindest eines Schnittpunkts, in welchem sich die Punktewolke und der Bezugsabschnitt schneiden, und Bestimmen der Position des Schnittpunkts, mittels der Steuerungseinheit.

Die Sendeeinheit kann dabei so ausgestaltet sein, dass sie sich um eine Achse, insbesondere um eine horizontal verlaufende Achse, dreht. Dabei wird neben dem Messbereich, in welchem sich die Außenoberfläche des Transportmittels erwartungsgemäß befindet, ein weiterer Messbereich definiert, in welchem sich die Wasseroberfläche oder der Boden erwartungsgemäß befindet. Bezogen auf den weiteren Messbereich wird dann zumindest ein weiterer Bezugsbereich definiert. Im Übrigen kann aber der Abstand zwischen der Messeinrichtung und dem Boden oder der Wasseroberfläche auf dieselbe Weise bestimmt werden wie auch bei der Bestimmung der Position der Außenoberfläche relativ zur Zugangs- und Zuführvorrichtung.

Im Falle eines Flugzeugs, welches auf einem Boden steht, ist der Abstand zwischen dem Boden und der Messeinrichtung üblicherweise bekannt, so dass es einer Bestimmung nicht bedarf. Die Bestimmung des Abstands gemäß dieser Ausführungsform des Verfahrens kann aber zum Überprüfen der Funktionsfähigkeit des Verfahrens verwendet werden. Wenn sich eine zu große Abweichung zwischen dem tatsächlichen Abstand und dem mit diesem Verfahren bestimmten Abstand ergibt, können Korrekturmaßnahmen eingeleitet werden.

Der Abstand zwischen der Messeinrichtung und der Wasseroberfläche kann hingegen relativ stark schwanken, insbesondere aufgrund von sich ändernden Pegelständen und Wellengang. Allerdings werden in den meisten Häfen die Pegelstände automatisch gemessen, welche bei der Bestimmung des Abstands zwischen der Messeinrichtung und der Wasseroberfläche berücksichtigt werden können. Folglich lassen sich auch hier Werte für den Abstand bestimmen, welche mit denen verglichen werden können, die mit dem vorliegenden Verfahren bestimmt worden sind. Somit lässt sich auch bei der Verwendung der Wasseroberfläche die Funktionsfähigkeit des Verfahrens überprüfen. Zudem lässt sich in vielen Fällen auch in Häfen ein Boden finden, welcher auf ähnliche Weise wie bei Flughäfen zum Überprüfen des gemessenen Abstands verwendet werden kann.

Prinzipiell kann das Verfahren auch dazu verwendet werden, nur den Abstand zwischen der Messeinrichtung und dem Boden bzw. zwischen der Messeinrichtung und der Wasseroberfläche zu bestimmen, ohne dass die Position der Außenoberfläche des Transportmittels relativ zur Zugangs- oder Zuführvorrichtung bestimmt wird. Dies kann bei Kalibrierungs- und Überprüfungsvorgängen der Fall sein.

Durch die Verwendung der Messeinrichtung kann der Abstand zwischen der Messeinrichtung und dem Boden mit hoher Präzision gemessen werden. Dies ermöglicht eine genaue Bestimmung der Höhe des Flugzeugs über dem Boden und somit eine Echtzeitüberwachung der Höhe des Flugzeugs, was besonders nützlich beim Bodenhandling ist. Die genaue Kenntnis des Abstands zwischen dem Flugzeug und dem Boden kann auch dazu beitragen, Kollisionen oder Schäden zu vermeiden. Durch die Überwachung und Kontrolle des Abstands können potenzielle Risiken rechtzeitig erkannt und Maßnahmen ergriffen werden, um die Sicherheit zu gewährleisten. Die Überwachung und die Kontrolle des Abstands ermöglichen die Erkennung von potenziellen Risiken und das rechtzeitige Ergreifen von Gegenmaßnahmen, um die Sicherheit zu gewährleisten.

Eine Ausbildung der Erfindung betrifft eine Zugangs- oder Zuführvorrichtung für Flugzeuge, welche eine Messeinrichtung mit
- einer Sendeeinheit zum Aussenden von elektromagnetischen und/oder mechanischen Wellen,
- einer Empfangseinheit zum Empfangen des reflektierten Teils der ausgesendeten Wellen, und
- einer Steuerungseinheit zum Steuern und/oder Regeln der Messeinrichtung umfasst, wobei
- die Zugangs- oder Zuführvorrichtung mittels eines Verfahrens nach einer der vorherigen Ausführungsformen zum Bestimmen der Position und/oder des Verlaufs einer Außenoberfläche eines Flugzeugs relativ zur Zugangs- oder Zuführvorrichtung betrieben werden kann.

Die technischen Effekte und Vorteile, die sich mit der vorschlagsgemäßen Vorrichtung erreichen lassen, entsprechen denjenigen, die für das vorliegende Verfahren erörtert worden sind.

Eine fortentwickelte Ausbildung kann vorgeben, dass die Zugangs- oder Zuführvorrichtung eine Witterungsschutzeinheit zum Reduzieren von Witterungseinflüssen auf das Bestimmen der Position und/oder des Verlaufs der Außenoberfläche umfasst.

Regen, Schnee, Eis, Nebel, starke Winde oder andere Wetterphänomene könnten die Genauigkeit der Messungen beeinträchtigen. Die Witterungsschutzeinheit sorgt dafür, diese Einflüsse zu reduzieren oder zu eliminieren. Dies hilft, mögliche Schäden oder Fehlfunktionen der Messeinrichtung durch äußere Einflüsse zu vermeiden. Es werden unerwünschte Reflexionen oder Streuungen der ausgesendeten Wellen durch Witterungseinflüsse minimiert. Dadurch kann eine höhere Genauigkeit und Konsistenz der Messungen erzielt werden. Die Witterungsschutzeinheit verlängert die Betriebszeit der Messeinrichtung und ermöglicht kontinuierliche Messungen unabhängig von den vorherrschenden Wetterbedingungen.

Nach Maßgabe einer fortentwickelten Ausbildung kann die Witterungsschutzeinheit von der Zugangs- oder Zuführvorrichtung selbst gebildet werden.

Durch die Integration der Witterungsschutzeinheit in die Zugangs- oder Zuführvorrichtung entsteht ein zusammenhängendes und integriertes Design. Dadurch wird der Bedarf an separaten Komponenten oder zusätzlicher Montage reduziert, was zu einer einfacheren Installation und einem kompakteren Gesamtsystem führt. Beide Funktionen, Zugang und Witterungsschutz, können in einem einzigen Bauteil vereint werden. Dadurch werden Platz und Gewicht und in Verbindung mit geringerem Montage- und Integrationsaufwand auch Kosten eingespart. Auch werden die Wartung und Instandhaltung erleichtert. Da beide Funktionen in einem einzigen Bauteil vereint sind, sind im Falle einer Fehlfunktion weniger separate Komponenten betroffen, was die Wartungsarbeiten vereinfacht.

Bei einer weiteren Ausbildung kann vorgesehen sein, dass die Zugangs- oder Zuführvorrichtung einen Vorsprung mit einem freien Ende aufweist, wobei das freie Ende im bestimmungsgemäßen Gebrauch zum Flugzeug hinweist und die Messeinrichtung unterhalb des Vorsprungs angeordnet ist.

Die Zugänglichkeit zur Messeinrichtung wird erleichtert. Durch die Anordnung der Messeinrichtung unterhalb des Vorsprungs wird zudem die Wahrscheinlichkeit von nicht erwünschten Reflexionen der ausgesendeten Wellen reduziert. Ausgehend von der Zugangs- oder Zuführeinrichtung kann der Vorsprung bereits die Witterungsschutzeinheit selbst sein und damit auch dazu dienen, die Messeinrichtung vor direkten Umwelteinflüssen zu bewahren.

Eine weiterentwickelte Ausbildung kann vorgeben, dass die Messeinrichtung mittels eines Distanzstücks am Vorsprung befestigt ist.

Durch die Verwendung eines Distanzstücks kann der genaue Messabstand zwischen der Messeinrichtung und der Außenoberfläche des Flugzeugs präzise eingestellt werden. Dadurch kann die Messgenauigkeit verbessert werden, da der optimale Abstand für die Erfassung der reflektierten Wellen eingehalten wird. Das Distanzstück kann dazu beitragen, Vibrationen oder Störungen, die von der Zugangs- oder Zuführvorrichtung oder anderen Quellen kommen könnten, abzuschwächen oder zu isolieren, was zur Stabilität der Messeinrichtung und somit der Messungen beiträgt. Ein Distanzstück ermöglicht zudem eine flexible und anpassbare Installation der Messeinrichtung. Je nach den spezifischen Anforderungen und Gegebenheiten können verschiedene Distanzstücke verwendet werden, um die optimale Positionierung und Ausrichtung der Messeinrichtung zu erreichen.

### AUSFÜHRUNGSBEISPIELE DER ERFINDUNG

Beispielhafte Ausführungsformen der Erfindung werden im Folgenden unter Bezugnahme auf die beigefügten Zeichnungen näher erläutert. Es zeigen
- Figur 1: ein Ausführungsbeispiel einer erfindungsgemäßen Zugangsvorrichtung, welche in Kontakt mit einem Rumpf eines Transportmittels steht, wobei sich der Rumpf in einer ersten Stellung befindet,
- Figur 2: das in Figur 1 gezeigte Ausführungsbeispiel, wobei sich der Rumpf in einer zweiten Stellung befindet,
- Figur 3: das in Figur 1 gezeigte Ausführungsbeispiel, wobei sich der Rumpf in einer dritten Stellung befindet, jeweils anhand von prinzipiellen Schnittdarstellungen,
- Figur 4: eine vergrößerte Darstellung des in Figur 3 definierten Ausschnitts A,
- Figur 5: eine alternative Darstellung mit zusätzlicher Witterungsschutzeinheit als separates Bauteil
- Figur 6a: eine erste graphische Darstellung zur Erläuterung des erfindungsgemäßen Verfahrens,
- Figur 6b: eine zweite graphische Darstellung zur Erläuterung des erfindungsgemäßen Verfahrens,
- Figur 6c: eine dritte graphische Darstellung zur Erläuterung des erfindungsgemäßen Verfahrens, und
- Figur 7: ein Ablaufdiagramm eines erfindungsgemäßen Verfahrens zum Bestimmen der Position und/oder des Verlaufs einer Außenoberfläche eines Flugzeugs relativ zu einer Zugangs- oder Zuführvorrichtung.

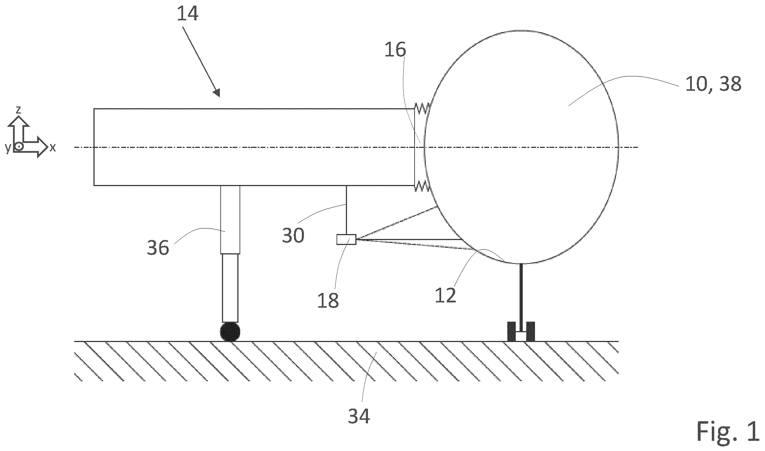

Figur 1 zeigt ein Ausführungsbeispiel einer erfindungsgemäßen Zugangsvorrichtung 14, die in Kontakt mit einem Transportmittel 38, beispielsweise einem Rumpf eines Flugzeugs 10, insbesondere mit der Außenoberfläche des Flugzeugs 12 steht. Der Rumpf des Flugzeugs befindet sich dabei in einer ersten Position, beispielsweise in einer Park- oder Abfertigungsposition, in welcher das Flugzeug 10 auf einem Boden, insbesondere auf einem Vorfeld, steht.

Die Zugangsvorrichtung 14 ist so konzipiert, dass sie dem Personal oder den Passagieren einen sicheren und bequemen Zugang zum Flugzeug 10 ermöglicht. Im Ausführungsbeispiel der Figur 1 ist die Zugangsvorrichtung 14 als separates Bauteil dargestellt, das mit dem Rumpf des Flugzeugs in Kontakt gebracht ist. In dieser ersten Position des Flugzeugrumpfs befindet sich das Flugzeug bereit für Abfertigungsvorgänge wie das Ein- oder Aussteigen von Passagieren, das Catering, die Befüllung mit Treibstoff oder die Be- und Entladung von Fracht. Abgebildet ist neben der Zugangsvorrichtung 14 mit einem Faltenvordach 16 auch eine unter der Zugangsvorrichtung 14 selbst angeordnete Messeinrichtung 18, welche mit der Zugangsvorrichtung 14 durch ein Distanzstück 30 verbunden ist. Die Messeinrichtung 18 erfasst die Außenoberfläche 12 des Flugzeugrumpfs präzise mit einer bestimmten Zahl von Vektoren, deren Länge und Winkel feststehend in einem Koordinatensystem als Punktwolke der ersten Position festgelegt werden.

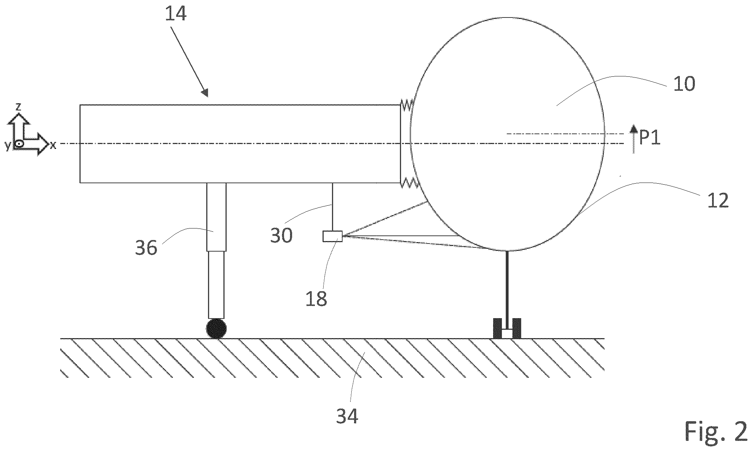

In Figur 2 befindet sich das Flugzeug 10 in einer zweiten Stellung, in welcher der Flugzeugrumpf gegenüber der ersten Stellung angehoben wurde, beispielsweise infolge eines Entladeprozesses. Das Anheben ist in Figur 2 mit dem Pfeil P1 symbolisiert. Hierdurch ändern sich verschiedene Distanzen zwischen der Messeinrichtung 18 und gemessenen Punkten auf der Außenoberfläche 12 dergestalt, dass der reflektierte Teil der elektromagnetischen oder mechanischen Wellen im Koordinatensystem eine von der Punktwolke aus der ersten Position abweichende Punktwolke erzeugt.

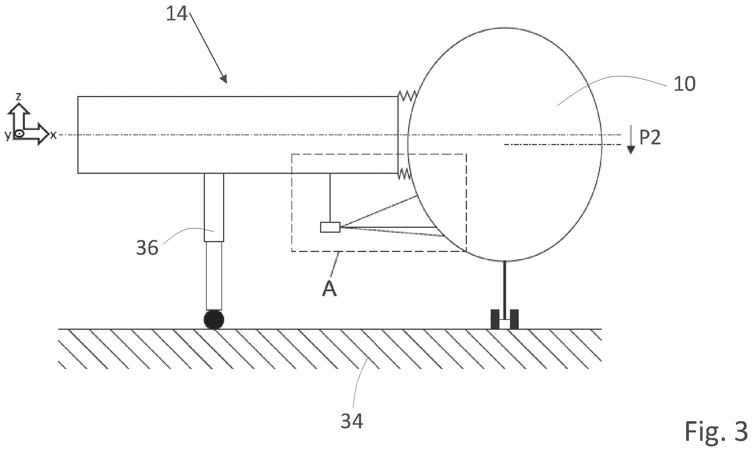

Figur 3 veranschaulicht das Absenken des Flugzeugrumpfs, bei der die Messeinrichtung 18 infolge des Beladens des Flugzeugs 10 eine dem Boden 34 nähere Position registriert. Das Absenken ist mit dem Pfeil P2 graphisch dargestellt. Auch hier ändern sich verschiedene Distanzen zwischen der Messeinrichtung 18 und gemessenen Punkten auf der Außenoberfläche 12.

Beim Anhebe- wie auch Absenkprozess soll die Position der Zugangsvorrichtung 14 ab einem bestimmten Wert nachreguliert werden, wobei dies beispielsweise hydraulisch oder elektrisch durch eine Positionierungseinrichtung 36 geschieht.

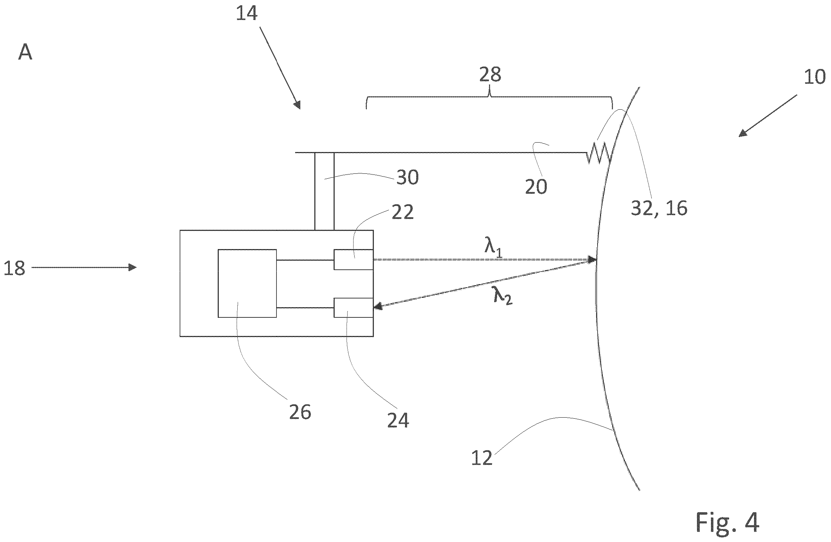

Figur 4 zeigt den Ausschnitt A, welcher Details zur Messeinrichtung 18 demonstriert:
Die auch hier gezeigte Außenoberfläche 12 bezieht sich auf die äußere Hülle oder den Bereich des Flugzeugs, auf den die Zugangs- oder Zuführvorrichtung 14 zugreifen oder zugeführt werden kann. Die Messeinrichtung 18 umfasst verschiedene Komponenten wie eine Sendeeinheit 22, eine Empfangseinheit 24 und eine Steuerungseinheit 26. Die Messeinrichtung 18 erfasst Informationen über die Position oder den Verlauf der Außenoberfläche 12 des Flugzeugs.

Die Sendeeinheit 22 sendet elektromagnetische oder mechanische Wellen λ₁ aus, die von der Außenoberfläche 12 des Flugzeugs 10 zumindest teilweise reflektiert werden. Die Empfangseinheit 24 empfängt den reflektierten Teil λ₂ der ausgesendeten Wellen. Die Steuerungseinheit 26 steuert und regelt die Messeinrichtung 18 und ermöglicht die Analyse der Reflexionen. Sie kann einen auf die Intensität des reflektierten Teils λ₂ bezogenen Intensitätsschwellenwert definieren und die Position der Außenoberfläche 12 ermitteln.

Die Ausführungsform aus Figur 4 zeigt auch eine Witterungsschutzeinheit 20, welche die Messeinrichtung 18 vor Witterungseinflüssen schützt. Die Messeinrichtung 18 ist unter einem Vorsprung 28 angeordnet, welcher ein freies Ende 32 im Bereich des Faltenvordachs 16 aufweist, das in Richtung des Flugzeugs 10 zeigt. Der Vorsprung 28 wird dabei von einem in diesem Fall über die Positionierungseinrichtung 36 zum freien Ende 32 hin überstehenden Teil der Zugangs- oder Zuführvorrichtung 14 gebildet. Das Distanzstück 30 dient zur Befestigung der Messeinrichtung 18 am Vorsprung 28 der Zugangs- oder Zuführvorrichtung 14.

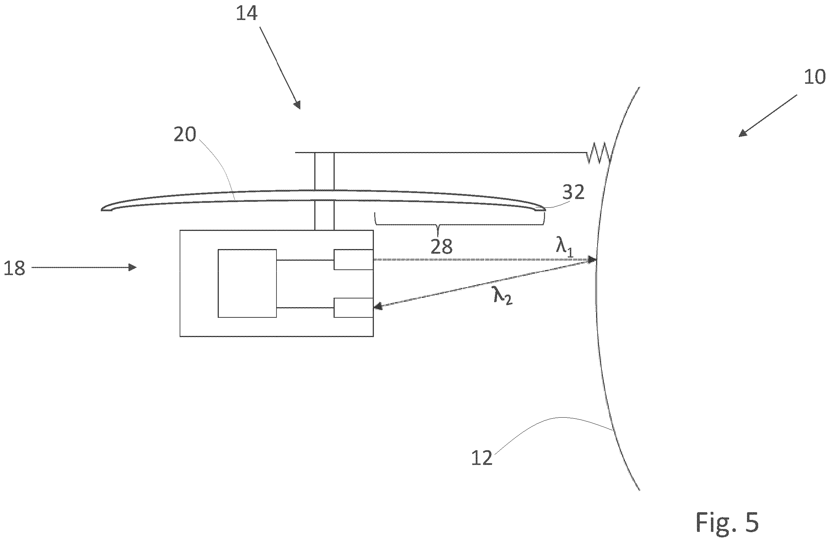

In einem anderen Ausführungsbeispiel, gezeigt in Figur 5, wird die Witterungsschutzeinheit 20 nicht von der Zugangs- oder Zuführvorrichtung 14 selbst gebildet. Stattdessen kommt hierfür ein separates Bauteil zum Einsatz, sodass die Messeinrichtung 18 vor äußeren Einflüssen durch die vorzugsweise nah an der Messeinrichtung 18 befindliche Witterungsschutzeinheit 20 und ihren Vorsprung 28 geschützt ist.

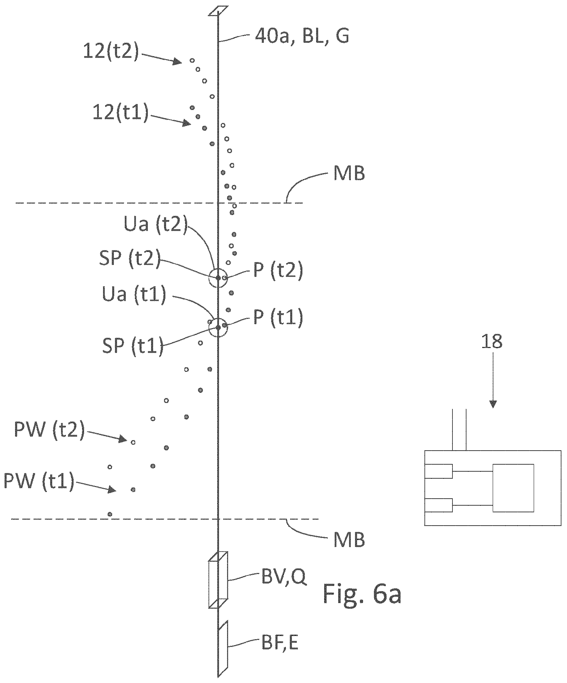

Figur 6a zeigt Details des erfindungsgemäßen Verfahrens zum Bestimmen der Position einer Außenoberfläche 12 eines Transportmittels 38 (siehe hierzu auch insbesondere Figuren 1 bis 3). Das Transportmittel 38, von welchem die Position seiner Außenoberfläche 12 ermittelt werden soll, befindet sich dabei in einer Halteposition (Flugzeug) oder ist am Anlieger befestigt (Schiff), so dass die Zugangs- oder Zuführvorrichtung 14 an das Transportmittel 38 herangefahren werden kann.

Zunächst wird ein Messbereich MB definiert, in welchem sich die Außenoberfläche 12 des Transportmittels 38 erwartungsgemäß befindet. Weiterhin wird ein Bezugsabschnitt 40a definiert, der sich im Messbereich MB befindet oder, wie in Figur 6a gezeigt, den Messbereich MB durchläuft. Es kann sich anbieten, dass der Bezugsabschnitt 40a vom Messbereich MB begrenzt wird und sich folglich nicht über diesen hinaus erstreckt. Im dargestellten Ausführungsbeispiel ist der Bezugsabschnitt 40a anhand einer Bezugslinie BL definiert, welche eine Gerade G ist. In Figur 6a ist zudem zur Veranschaulichung weiterer Ausführungsbeispiele eine Bezugsfläche BF und ein Bezugsvolumen BV gezeigt, mit welcher bzw. welchem der Bezugsabschnitt 40a definiert werden kann. Die Bezugsfläche BF ist dabei eine Ebene E und das Bezugsvolumen BV ein Quader Q. In diesen dargestellten Definitionen weist der Bezugsabschnitt 40a keine Wölbung auf, was nicht zwangsläufig so sein muss.

Die Wellen λ₁ (Figur 4) werden von der Messeinrichtung 18 so ausgesendet, dass sie den Messbereich MB vollständig abdecken und auf die Außenoberfläche 12 des Transportmittels 38 treffen. Der reflektierte Teil λ₂ der der ausgesendeten Wellen werden von der Empfangseinheit 34 empfangen und von der Messeinrichtung 18 dahingehend ausgewertet, dass eine Punktewolke PW erzeugt wird. Wie aus Figur 6a hervorgeht, bildet die Punktewolke PW den Verlauf der Außenoberfläche 12 anhand einer Vielzahl von Punkten P diskret ab.

Zudem wird ein Umgebungsbereich U definiert, beispielsweise unter Verwendung eines Kreises. Der Kreis wird entlang der Bezugslinie BL bewegt, bis dass zumindest ein Punkt P der Punktewolke PW innerhalb des Kreises liegt. Dieser Punkt P ist derjenige, welcher den geringsten Abstand zur Bezugslinie BL hat. Liegen mehrere Punkte P innerhalb des Kreises, kann der der Abstand dieser Kreise zur Bezugslinie BL gemessen und derjenige Punkt P identifiziert werden, welcher den geringsten Abstand zur Bezugslinie BL hat. Die Position auf der Bezugslinie BL und der Radius des Kreises können so geändert werden, bis dass nur noch der Punkt P mit dem geringsten Abstand zur Bezugslinie BL im Kreis liegt.

Die Position des Mittelpunkts dieses Kreises auf der Bezugslinie BL kann dann als die Position eines Schnittpunkts SP angenommen werden (nicht dargestellt), in welchem sich die Punktewolke und die Bezugslinie BL schneiden. Andere Vorgehensweisen zur Ermittlung der Position des Schnittpunkts SP sind ebenfalls denkbar.

Diese Vorgehensweise wird in regelmäßigen zeitlichen Abständen wiederholt. Je nach verfügbarer Rechenleistung können die zeitlichen Abstände sehr gering sein, so dass die Position der Schnittpunkte SP quasikontinuierlich ermittelt werden kann. In Figur 6a ist die Position eines ersten Schnittpunkts SP(t1) zu einem ersten Zeitpunkt und eines zweiten Schnittpunkts SP(t2) zu einem zweiten Zeitpunkt ermittelt worden. Zwischen dem ersten Zeitpunkt und dem zweiten Zeitpunkt hat sich die Position der Außenoberfläche 12 des Transportmittels 38 geändert, so dass die Positionen des ersten Schnittpunkts SP(t1) und des zweiten Schnittpunkts SP(t2) voneinander abweichen, wobei beide Schnittpunkte SP(t1) und SP(t2) auf der Bezugslinie liegen. Hierauf wird später noch genauer eingegangen.

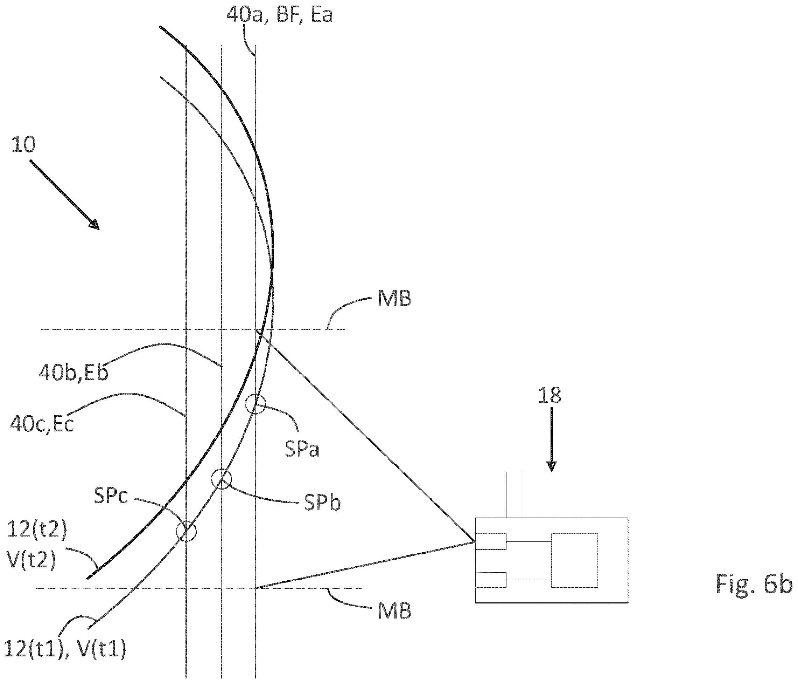

Figur 6b zeigt im Wesentlichen dasselbe wie Figur 6a, allerdings ist hier aus der Punktewolke PW eine Verlaufslinie V erzeugt worden, so dass der Verlauf der Außenoberfläche 12 des Transportmittels 38 nun kontinuierlich abgebildet wird. Es ist eine erste Verlaufslinie V(t1) zum ersten Zeitpunkt und eine zweite Verlaufslinie V(t2) zum zweiten Zeitpunkt dargestellt.

Zudem werden insgesamt drei Bezugsabschnitte 40a, 40b, 40c verwendet, die jeweils als Bezugsflächen BF in Form einer ersten Ebene Ea, einer zweiten Ebene Eb und einer dritten Ebene Ec ausgebildet sind. Es können daher ein primärer Schnittpunkt SPa mit der ersten Ebene Ea, ein sekundärer Schnittpunkt SPb mit der zweiten Ebene Eb und ein tertiärer Schnittpunkt SPc mit der dritten Ebene Ec definiert werden. In Figur 6b sind der primäre Schnittpunkt SP, der sekundäre Schnittpunkt SP und der tertiäre Schnittpunkt SP zum ersten Zeitpunkt dargestellt.

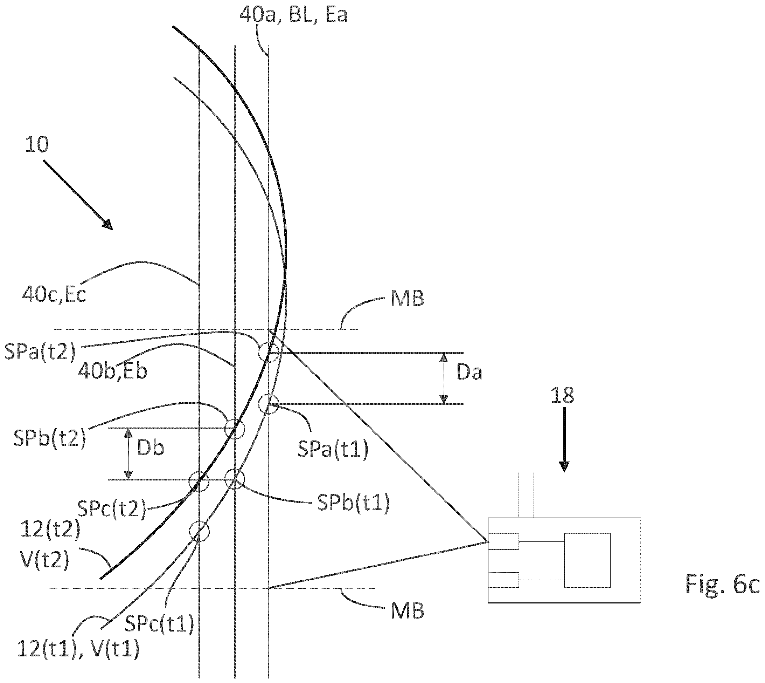

Wie erwähnt, ist in Figur 6b zum ersten Zeitpunkt eine erste Verlaufslinie V(t1) und zum zweiten Zeitpunkt eine zweite Verlaufslinie V(t2) ermittelt worden. In Figur 6c sind neben dem primären Schnittpunkt SPa(t1), dem sekundären Schnittpunkt SPb(t1) und dem tertiären Schnittpunkt SPc(t1) zum ersten Zeitpunkt auch der primäre Schnittpunkt SPa(t2), der sekundäre Schnittpunkt SPb(t2) und der tertiäre Schnittpunkt SPc(t2) jeweils zum zweiten Zeitpunkt dargestellt. Zudem ist eine erste Differenz Da zwischen dem primären Schnittpunkt SPa(t1), SPa(t2) zum ersten Zeitpunkt und zum zweiten Zeitpunkt auf der ersten Ebene Ea und eine zweite Differenz Db zwischen dem sekundären Schnittpunkt SPb(t1), SPb(t2) zum ersten Zeitpunkt und zum zweiten Zeitpunkt auf der zweiten Ebene Eb dargestellt. Eine entsprechende dritte Differenz Dc auf der dritten Ebene Ec ist aus Darstellungsgründen nicht gezeigt. Die Differenzen D sind Unterschiede in den Positionen der genannten Schnittpunkte SP auf den jeweiligen Ebenen E und somit Abstände.

Die erste Ebene Ea, die zweite Ebene Eb und die dritte Ebene Ec verlaufen parallel zueinander und senkrecht zum Boden 34 (siehe Figuren 1 bis 3). Üblicherweise verändert sich die Position des Transportmittels 38 auch senkrecht zum Boden 34, so dass das Transportmittel 38 hierbei eine rein translatorische Bewegung durchführt. Bei einer ungleichmäßigen Beladung kann es vorkommen, dass sich die Position nur auf einer Seite ändert oder auf einer Seite stärker ändert als auf der anderen Seite, so dass es zu einer Drehbewegung kommt. Während bei einer rein translatorischen Bewegung, wie in den Figuren 6a bis 6c dargestellt, die erste Differenz Da und die zweite Differenz Db gleich sind, kann dies bei einer Drehbewegung anders sein, was aber bei Flugzeugen so gut wie nie vorkommt. Bei Schiffen kann dies aber anders sein. Hier kann eine Nachregulierung in x-, in y- und in z-Richtung erfolgen.

Es wird im Folgenden davon ausgegangen, dass die erste Differenz Da und die zweite Differenz Db bei einer Positionsänderung gleich sind. Entsprechend kann die Steuerungseinheit 26 mehrere Differenzen D verarbeiten und auf Plausibilität prüfen, ohne irgendwelche Korrekturen insbesondere in Abhängigkeit der Ebenen E, auf denen die Differenzen D liegen, vornehmen zu müssen. Nicht plausibel erscheinende Differenzen D können ignoriert und aus den verbleibenden Differenzen D ein Durchschnitt gebildet werden. Diese Differenz D kann dann mit einem Positionsdifferenzschwellenwert verglichen werden. Für den Fall, dass der Positionsdifferenzschwellenwert unter- oder überschritten wird, kann die Positionierungseinrichtung 36 derart aktiviert werden, dass die Differenz D verringert wird.

Nicht dargestellt ist ein Ausführungsbeispiel des vorliegenden Verfahrens, bei welchem neben der Bestimmung der Position der Außenoberfläche des Transportmittels relativ zur Zugangs- oder Zuführvorrichtung auch der Abstand zwischen der Messeinrichtung und der Wasseroberfläche oder zwischen der Messeinrichtung und dem Boden ermittelt wird. Im Wesentlichen wird die Bestimmung des Abstands auf dieselbe Weise durchgeführt wie die Bestimmung der Position der Außenoberfläche. Allerdings wird hierbei ein weiterer Messbereich bestimmt, in welchem sich der Boden oder die Wasseroberfläche erwartungsgemäß befindet oder welcher vom Boden oder der Wasseroberfläche durchlaufen wird. Zudem wird zumindest ein weiterer Bezugsabschnitt definiert, welcher sich im weiteren Messbereich befindet oder welcher den weiteren Messbereich durchläuft. Die Messeinrichtung ist dabei so ausgestaltet, dass die von der Sendeeinheit ausgesendeten Wellen nicht nur den Messbereich, sondern auch den weiteren Messbereich erfassen. Dies kann beispielsweise dadurch realisiert werden, dass sich die Sendeeinheit um eine horizontale Achse dreht. Die Auswertung des von der Wasseroberfläche oder des Bodens reflektierten Teils der ausgesendeten Wellen geschieht auf dieselbe Weise, auf welcher die Position der Außenoberfläche bestimmt wird.

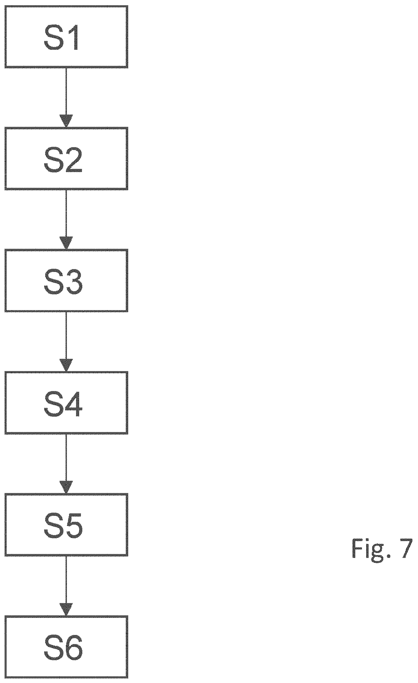

Figur 7 stellt die für eine Ausführungsform notwendigen Arbeitsschritte zum Ausführen des erfindungsgemäßen Verfahrens auf der Messeinrichtung 18 graphisch dar.

| | |
|---|---|
| S1: | Definieren eines Messbereichs MB, in welchem sich die Außenoberfläche 12 erwartungsgemäß befindet oder welcher von der Außenoberfläche 12 erwartungsgemäß durchlaufen wird. |
| S2: | Definieren zumindest eines Bezugsabschnitts 40a, 40b, 40c, welcher sich im Messbereich (MB) befindet oder welcher den Messbereich MB durchläuft. |
| S3: | Aussenden der Wellen λ₁ mittels der Sendeeinheit 22 derart, dass die Wellen λ₁ den Messbereich MB erfassen. |
| S4: | Empfangen des reflektierten Teils λ₂ der ausgesendeten Wellen λ₁ mittels der Empfangseinheit 24, |
| S5: | Erzeugen einer Punktewolke, welche den Verlauf der Außenoberfläche 12 abbildet, unter Verwendung des empfangenen reflektierten Teils λ₂ der ausgesendeten Wellen λ₁, mittels der Steuerungseinheit, |
| S6: | Bestimmen zumindest eines Schnittpunkts, in welchem sich die Punktewolke und der Bezugsabschnitt 40a, 40b, 40c schneiden, und Bestimmen der Position des Schnittpunkts, mittels der Steuerungseinheit. |

### Bezugszeichenliste

10 Flugzeug
12 Außenoberfläche
14 Zugangs- oder Zuführvorrichtung
16 Faltenvordach
18 Messeinrichtung
20 Witterungsschutzeinheit
22 Sendeeinheit
24 Empfangseinheit
26 Steuerungseinheit
28 Vorsprung
30 Distanzstück
32 Freies Ende
34 Boden
36 Positionierungseinrichtung
38 Transportmittel
40a, 40b, 40cBezugsabschnitt
BF Bezugsfläche
BL Bezugslinie
BV Bezugsvolumen
D Differenz
G Gerade
E Ebene
MB Messbereich
P Punkte auf Punktewolke
PW Punktewolke
Q Quader
SP Schnittpunkt
U Umgebungsbereich
V Verlaufslinie
λ₁ elektromagnetische oder mechanische Wellen
λ₂ reflektierter Teil

## Patentansprüche

1. Verfahren zum Bestimmen der Position einer Außenoberfläche (12) eines schwimmfähigen oder flugfähigen Transportmittels (38) relativ zu einer Zugangs- oder Zuführvorrichtung (14), wobei an der Zugangs- oder Zuführvorrichtung (14) eine Messeinrichtung (18) angeordnet ist, welche
- eine Sendeeinheit (22) zum Aussenden von elektromagnetischen und/oder mechanischen Wellen (λ₁),
- eine Empfangseinheit (24) zum Empfangen des reflektierten Teils (λ₂) der ausgesendeten Wellen (λ₁), und
- eine Steuerungseinheit (26) zum Steuern und/oder Regeln der Messeinrichtung (18) umfasst,
wobei das Verfahren folgende Schritte umfasst:
- Definieren eines Messbereichs (MB), in welchem sich die Außenoberfläche (12) erwartungsgemäß befindet oder welcher von der Außenoberfläche (12) erwartungsgemäß durchlaufen wird, mittels der Steuerungseinheit (26),
- Definieren zumindest eines Bezugsabschnitts (40a, 40b, 40c), welcher sich im Messbereich (MB) befindet oder welcher den Messbereich (MB) durchläuft, mittels der Steuerungseinheit (26),
- Aussenden der Wellen (λ₁) mittels der Sendeeinheit (22) derart, dass die Wellen (λ₁) den Messbereich (MB) erfassen,
- Empfangen des reflektierten Teils (λ₂) der ausgesendeten Wellen (λ₁) mittels der Empfangseinheit (24),
- Erzeugen einer Punktewolke (PW), welche den Verlauf der Außenoberfläche (12) abbildet, unter Verwendung des empfangenen reflektierten Teils (λ₂) der ausgesendeten Wellen (λ₁), mittels der Steuerungseinheit (26),
- Bestimmen zumindest eines Schnittpunkts (SP), in welchem sich die Punktewolke (PW) und der Bezugsabschnitt (40a, 40b, 40c) schneiden, und Bestimmen der Position des Schnittpunkts (SP), mittels der Steuerungseinheit (26).

2. Verfahren nach Anspruch 1,
**dadurch gekennzeichnet, dass** der Bezugsabschnitt (40a, 40b, 40c)
- eine Bezugslinie (BL), eine Bezugsfläche (BF) oder ein Bezugsvolumen (BV) ist.

3. Verfahren nach Anspruch 2,
**dadurch gekennzeichnet, dass**
- die Bezugslinie (BL) eine Gerade (G), oder
- die Bezugsfläche (BF) eine Ebene (E), oder
- das Bezugsvolumen (BV) ein Quader (Q) ist.

4. Verfahren nach einem der vorherigen Ansprüche
**gekennzeichnet durch** folgenden Schritt:
- Erzeugen einer Verlaufsfläche oder Verlaufslinie (V) aus der Punktewolke (PW), welche den Verlauf der Außenoberfläche (12) abbildet, mittels der Steuerungseinheit (26).

5. Verfahren nach einem der vorherigen Ansprüche,
**gekennzeichnet durch** folgende Schritte:
- Definieren eines Umgebungsbereichs (U) um den Bezugsbereich (40a, 40b, 40c), und
- Definieren des Schnittpunkts (SP) unter Verwendung der im Umgebungsbereich (U) liegenden Punkte (P) der Punktewolke (PW), jeweils mittels der Steuerungseinheit (26).

6. Verfahren nach einem der vorherigen Ansprüche,
**dadurch gekennzeichnet, dass** der Verlauf der Außenoberfläche (12) zumindest eines schwimmfähigen oder flugfähigen Transportmittels (38) auf der Steuerungseinheit (26) hinterlegt ist.

7. Verfahren nach einem der vorherigen Ansprüche,
**dadurch gekennzeichnet, dass** auch die ausgesendeten Wellen (λ₁) in die Auswertung bezüglich der auf die räumliche Verteilung der Ursprungsorte bezogenen Größen miteinbezogen werden.

8. Verfahren nach einem der vorherigen Ansprüche,
**dadurch gekennzeichnet, dass** die auf die räumliche Verteilung der Ursprungsorte bezogenen Größen die Intensität, die Phase, die Frequenz und/oder die Signalstärke der ausgesendeten Wellen (λ₁) und/oder des reflektierten Teils (λ₂) der ausgesendeten Wellen (λ₁) umfassen.

9. Verfahren nach einem der vorherigen Ansprüche,
wobei die Zugangs- oder Zuführvorrichtung (14) eine Positionierungseinrichtung (36) zum Ändern der Position der Zugangs- oder Zuführvorrichtung (14) aufweist,
**dadurch gekennzeichnet, dass** mittels der Steuerungseinheit (26)
- ein Positionsdifferenzschwellenwert bezüglich der Position der Außenoberfläche (12) definiert wird,
- zu einem ersten Zeitpunkt eine erste Position des Schnittpunkts (SP(t1)) und zu einem zweiten Zeitpunkt eine zweite Position des Schnittpunkts (SP(t2)) ermittelt werden,
- die erste Position mit der zweiten Position verglichen sowie eine Differenz (D, Da, Db) zwischen der ersten Position und der zweiten Position ermittelt und mit dem Positionsdifferenzschwellenwert verglichen wird, und
- für den Fall, dass der Positionsdifferenzschwellenwert unter- oder überschritten wird, die Positionierungseinrichtung (36) derart aktiviert wird, dass die Differenz (D, Da, Db) verringert wird.

10. Verfahren nach einem der vorherigen Ansprüche,
**dadurch gekennzeichnet, dass** mittels der Messeinrichtung (18) der Abstand zwischen der Messeinrichtung (18) und
- dem Boden (34), auf dem das flugfähige Transportmittel (38) steht, oder
- der Wasseroberfläche, auf welcher das schwimmfähige Transportmittel (38) schwimmt, bestimmt wird.

11. Zugangs- oder Zuführvorrichtung (14) für schwimmfähige oder flugfähige Transportmittel (38), welche eine Messeinrichtung (18) mit
- einer Sendeeinheit (22) zum Aussenden von elektromagnetischen und/oder mechanischen Wellen (λ₁),
- einer Empfangseinheit (24) zum Empfangen des reflektierten Teils (λ₂) der ausgesendeten Wellen (λ₁), und
- einer Steuerungseinheit (26) zum Steuern und/oder Regeln der Messeinrichtung (18) umfasst, wobei
- die Zugangs- oder Zuführvorrichtung (14) mittels eines Verfahrens nach einem der vorherigen Ansprüche zum Bestimmen des Verlaufs und/oder der Position einer Außenoberfläche (12) eines schwimmfähigen oder flugfähigen Transportmittels (38) relativ zur Zugangs- oder Zuführvorrichtung (14) betrieben werden kann.

12. Zugangs- oder Zuführvorrichtung (14) nach Anspruch 11,
**dadurch gekennzeichnet, dass** die Zugangs- oder Zuführvorrichtung (14) eine Witterungsschutzeinheit (20) zum Reduzieren von Witterungseinflüssen auf das Bestimmen der Position und/oder des Verlaufs der Außenoberfläche (12) umfasst.

13. Zugangs- oder Zuführvorrichtung (14) nach Anspruch 12,
**dadurch gekennzeichnet, dass** die Witterungsschutzeinheit (20) von der Zugangs- oder Zuführvorrichtung (14) selbst gebildet wird.

14. Zugangs- oder Zuführvorrichtung (14) nach Anspruch 13,
**dadurch gekennzeichnet, dass** die Zugangs- oder Zuführvorrichtung (14) einen Vorsprung (28) mit einem freien Ende (32) aufweist, wobei das freie Ende (32) im bestimmungsgemäßen Gebrauch zum schwimmfähigen oder flugfähigen Transportmittel (38) hinweist und die Messeinrichtung (18) unterhalb eines Vorsprungs (28) angeordnet ist.

15. Zugangs- oder Zuführvorrichtung (14) nach Anspruch 14,
**dadurch gekennzeichnet, dass** die Messeinrichtung (18) mittels eines Distanzstücks (30) am Vorsprung (28) befestigt ist.
